# EUROPÄISCHE PATENTSCHRIFT

(11) **EP 3 140 531 B1**
(45) Veröffentlichungstag und Bekanntmachung des Hinweises auf die Patenterteilung: **04.04.2018**
(21) Anmeldenummer: 15707309.9
(22) Anmeldetag: 19.02.2015
(51) Int. Cl.: F02B 37/18, F16K 31/04, F01P 3/20, F02B 39/00

(54) **ABGASTURBOLADER MIT EINEM WASTE-GATE-VENTIL**
TURBOCHARGER HAVING A WASTE-GATE VALVE
TURBOCOMPRESSEUR À SOUPAPE DE DÉCHARGE

(30) Priorität: 09.05.2014 DE 102014106513
(43) Veröffentlichungstag der Anmeldung: 15.03.2017
(73) Patentinhaber: Pierburg GmbH, 41460 Neuss (DE)
(72) Erfinder: NOWAK, Martin, 51379 Leverkusen (DE); BENRA, Michael-Thomas, 44579 Castrop-Rauxel (DE); SANDERS, Michael, 41564 Kaarst (DE); ROTHGANG, Stefan, 47495 Rheinberg (DE)
(74) Vertreter: Patentanwälte ter Smitten Eberlein-Van Hoof Rütten Partnerschaftsgesellschaft mbB
(86) Internationale Anmeldenummer: PCT/EP2015/053497
(87) Internationale Veröffentlichungsnummer: WO 2015/169460

(56) Entgegenhaltungen:
- WO-A1-2010/123899
- WO-A1-2012/089459
- WO-A2-2010/009945
- JP-A- 2012 241 619
- US-A1- 2007 199 318

## Beschreibung

Die Erfindung betrifft einen Abgasturbolader mit einem Waste-Gate-Ventil, einem Verdichter und einer Turbine, einem Turbinengehäuse, einem Bypasskanal zur Umgehung der Turbine, einem Bypasskanalabschnitt, der im Turbinengehäuse ausgebildet ist, einem Aktorgehäuse, einem Elektromotor, der im Aktorgehäuse angeordnet ist, einem Getriebe, das im Aktorgehäuse angeordnet ist, einer Abtriebswelle des Getriebes, einem Regelkörper, der mit der Abtriebswelle gekoppelt ist und einen Öffnungsquerschnitt des Bypasskanals beherrscht.

Derartige Abgasturbolader mit Waste-Gate-Ventilen sind bekannt. Der Turbolader dient zur Erhöhung des Ladedrucks und damit zur Leistungssteigerung des Verbrennungsmotors. Der zu erzeugende Druck ist dabei aufgrund der Kopplung des Turbinenrades mit dem Verdichterrad immer abhängig von der geförderten Abgasmenge. In bestimmten Betriebszuständen ist es daher erforderlich, die auf den Verdichter wirkende Antriebsenergie zu verringern beziehungsweise zu regeln.

Hierzu werden unter anderem Waste-Gate-Ventile eingesetzt, welche in einem Bypasskanal angeordnet sind, über den die Turbine umgehbar ist, so dass nicht mehr die vollständige Strömungsmenge des Abgases auf das Turbinenrad wirkt. Diese Waste-Gate-Ventile sind zumeist als Klappenventile ausgebildet, die über einen pneumatischen Aktor betätigt werden, der ein mit der Klappe gekoppeltes Gestänge antreibt.

Da eine hohe thermische Belastung aufgrund des heißen Abgases im Bereich des Turbinengehäuses vorliegt, wurden diese pneumatischen Aktoren zur Verringerung der thermischen Belastung im Bereich des Verdichters, und insbesondere beabstandet zum Turbinengehäuse angeordnet.

Eine exakte Regelung der über den Bypasskanal abgeführten Abgasmenge ist jedoch mit einem pneumatischen Aktor schwierig. Aus diesem Grund sind in den letzten Jahren zunehmend auch Elektromotoren als Antrieb für Waste-Gate-Ventile verwendet worden. Diese wurden üblicherweise zur Verringerung der thermischen Belastung ebenfalls beabstandet zum Turbinengehäuse angeordnet, so dass weiterhin Gestänge zur Kopplung mit der Klappe verwendet wurden.

So ist aus der DE 10 2011 002 627 A1 ein Aktor eines Waste-Gate-Ventils bekannt, dessen Elektromotor koaxial zu einer Abtriebswelle angeordnet ist, an der ein Hebel befestigt ist, über den ein Gestänge betätigt wird, welches mit einer im Turbinengehäuse angeordneten Waste-Gate-Klappe wirkverbunden ist. Zur Vermeidung einer Überhitzung des Aktors wird dieser am Verdichtergehäuse im Bereich des Frischlufteinlasskanals positioniert, um eine thermsiche Kopplung zu diesem zu erhalten.

Aufgrund des stetig sinkenden, zur Verfügung stehenden Bauraums ist es jedoch wünschenswert, die Aktoren der Waste-Gate-Ventile in unmittelbarer Nähe zum Ventil selbst anzuordnen, da dies den zu verwendenden Bauraum reduziert und eine genauere Regelung ermöglicht. Auch entstehen bei der Verwendung von Gestängen häufig ein erhöhter Verschleiß der Mechanik, insbesondere durch hohe auftretende Querkräfte im Bereich der Klappenlagerung sowie ein erhöhter Aufwand bei der Montage.

Aus diesem Grund wird in der WO 2012/089459 A1 ein Abgasturbolader mit einem wassergekühlten Turbinengehäuse und integriertem elektrischen Waste-Gate-Ventil vorgeschlagen. Das Gehäuse, in dem der Elektromotor zum Antrieb des Waste-Gate-Ventils sowie das Getriebe angeordnet sind, ist Teil des Turbinengehäuses, in dem entsprechende Kühlkanäle zur Wasserführung ausgebildet sind. Der Elektromotor und das Getriebe werden somit am Turbinengehäuse montiert, wobei die hierfür erforderliche Öffnung am Turbinengehäuse durch einen Deckel verschlossen wird. Die Lagerung des Ventils ist ebenfalls im Turbinengehäuse angeordnet.

Bei der Verwendung der vorgeschlagenen Anordnung des Waste-Gate-Ventils besteht weiterhin die Gefahr einer thermischen Überlastung des Stellers, da das Kühlmittel beim Durchströmen des Turbinengehäuses stark aufgewärmt wird und nicht direkt am Aktor wirkt. Zusätzlich ist der Aktor einer direkten Wärmestrahlung von außen ausgesetzt, so dass bei ungünstigen Bedingungen weiterhin die Gefahr einer Überhitzung besteht.

Es stellt sich daher die Aufgabe, einen Abgasturbolader mit einem Waste-Gate-Ventil zu schaffen, bei dem eine thermische Überlastung des Antriebs des Aktors zuverlässig verhindert wird. Zusätzlich soll das Waste-Gate-Ventil leicht zu montieren sein und einen möglichst geringen Bauraum aufweisen. Des Weiteren ist eine möglichst exakte Regelbarkeit erwünscht.

Diese Aufgabe wird durch einen Abgasturbolader mit einem Waste-Gate-Ventil mit den Merkmalen des Hauptanspruchs 1 gelöst.

Dadurch, dass das Aktorgehäuse lösbar am Turbinengehäuse befestigt ist und einen separaten Kühlmittelkanal aufweist, der das Getriebe umfänglich umgibt und der axial durch einen Aktordeckel verschlossen ist besteht eine getrennte Kühlmittelversorgung des Aktors, so dass diese abhängig von der im Aktorgehäuse tatsächlich vorhandenen Temperatur und unabhängig von der Temperatur im Turbinengehäuse erfolgen kann.

Die Wirkung der Wärmestrahlung von der Turbine wird deutlich verringert, da das Aktorgehäuse direkt gekühlt wird. Es besteht eine thermische Trennung vom Turbinengehäuse trotz des direkten Klappenantriebs, durch den eine sehr genaue Regelung des Waste-Gate-Ventils möglich wird. Die Herstellung und Montage des Aktors ist trotz der Ausführung des Kühlmittelkanals im Aktorgehäuse sehr einfach, da wenige Bauteile verwendet werden müssen. Des Weiteren ist die Belastung der Klappenlagerung sehr gering.

Vorzugsweise sind am Aktordeckel Elektronikbauteile des Waste-Gate-Ventils angeordnet, so dass zusätzliche zu montierende Bauteile, welche die Elektronik aufnehmen, entfallen. Dies erleichtert die Montage zusätzlich.

In einer hierzu weiterführenden Ausbildung der Erfindung ist am Aktordeckel ein Stecker ausgebildet. Eine sonst notwendige Abdichtung einer Steckerdurchführung entfällt. Der Aktordeckel kann einstückig mit den notwendigen Leitungen durch Spritzgießen hergestellt werden. Somit entfallen Montageschritte, die sonst für die Montage der Elektronik im Gehäuse notwendig wären.

In einer weiteren vorteilhaften Ausführung ist am Aktordeckel ein berührungsloser Sensor zur Lagerückmeldung befestigt, der mit einem Magneten korrespondiert, der mit der Abtriebswelle verbunden ist, und zwar entweder direkt an der Abtriebswelle oder indirekt an einem mit der Abtriebswelle drehfest verbundenem Bauteil wie dem Abtriebszahnrad.

Eine weitere Vereinfachung ergibt sich, wenn am Aktordeckel die Anschlusskontakte für den Elektromotor ausgebildet sind, so dass beim Aufsetzen des Deckels automatisch die elektrische Kontaktierung des Elektromotors erfolgt. Entsprechend können alle stromführenden Leitungen am Deckel ausgebildet beziehungsweise in diesem eingespritzt ausgebildet sein.

Um eine besonders gute Kühlung des thermisch empfindlichen Elektromotors zu erhalten und entsprechend ausreichend Wärme abführen zu können, umgibt der Kühlmittelkanal den Elektromotor über die gesamte axiale Höhe zumindest teilweise radial. So kann einerseits die Wärme des Elektromotors nach außen geführt werden und andererseits besteht eine thermische Trennung zur gegebenenfalls heißen Umgebung des Aktors. Eine thermische Überlastung kann so zuverlässig verhindert werden.

Vorzugsweise sind am Aktorgehäuse in einem Aufnahmebereich des Elektromotors ein Kühlmitteleinlassstutzen und ein Kühlmittelauslassstutzen ausgebildet. Über diese kann ein unabhängiger Kühlkreis für den Waste-Gate-Aktor angeschlossen werden, so dass eine exakte Temperatursteuerung möglich ist.

Um eine einfache Herstellung des Aktorgehäuses auch im Druckgussverfahren nutzen zu können, ist der den Elektromotor umgebende Kühlmittelkanal axial durch einen Motordeckel verschlossen. Entsprechend kann der Kanal im Gehäuse durch Schieber erzeugt werden, so dass keine verlierbaren Kerne verwendet werden müssen.

Vorteilhafterweise ist der Kühlmittelkanal in Umfangsrichtung durch eine Trennwand unterbrochen, welche zwischen dem Kühlmitteleinlassstutzen und dem Kühlmittelauslassstutzen angeordnet ist und sich axial über die gesamte Höhe des Kühlmittelkanals erstreckt. Auf diese Weise wird eine Kurzschlussströmung vom Einlassstutzen zum Auslassstutzen verhindert. Stattdessen wird eine Zwangsströmung um das gesamte Getriebe und den Elektromotor und somit eine vollumfängliche Kühlung erzeugt.

Der benötigte Bauraum kann deutlich verringert werden, wenn der Elektromotor achsparallel zur Abtriebswelle angeordnet ist und sich der Aufnahmebereich des Elektromotors in Richtung des Turbinengehäuses erstreckt.

Vorzugsweise ist der Regelkörper mit der Abtriebswelle drehfest verbunden. Diese Befestigung kann entweder direkt an der Welle erfolgen oder über einen auf den Regelkörper greifenden Hebel, der sich von der Welle aus erstreckt. Eine solche Ausführung verringert den Montageaufwand und ermöglicht eine sehr genaue Regelbarkeit.

Alternativ oder ergänzend ist der Regelkörper vorteilhafterweise mit einer Klappenwelle gekoppelt, die eine gemeinsame Drehachse mit der Abtriebswelle aufweist. So bleibt die gute Regelbarkeit erhalten, jedoch kann eine thermische Trennung oder Isolierung zur Verringerung der über die Welle in den Aktor transportierten Wärme eingesetzt werden.

Dies kann beispielsweise dadurch erfolgen, dass die Klappenwelle mit der Abtriebswelle über eine Oldham-Kupplung gekoppelt ist, die eine direkte Drehkopplung sicherstellt und durch die verringerten Anlageflächen den Wärmetransport mindert. Zusätzlich kann diese Kupplung aus einem schlecht Wärme leitenden Material wie Keramik hergestellt werden.

Es wird somit ein Abgasturbolader mit einem Waste-Gate-Ventil geschaffen, welches zuverlässig vor thermischer Überlastung geschützt ist und vormontiert am Turbolader angebracht werden kann, so dass die Montage erleichtert wird, wobei eine sehr genaue Regelung des Waste-Gate-Ventils möglich ist. Die Kühlung kann dabei getrennt an die Bedürfnisse der Turbine und des Ventils angepasst werden. Der benötigte Bauraum ist im Vergleich zu bekannten Ausführungen deutlich verringert.

Ein Ausführungsbeispiel eines erfindungsgemäßen Abgasturboladers mit einem Waste-Gate-Ventil ist in den Figuren dargestellt und wird nachfolgend beschrieben.
Figur 1 zeigt eine Seitenansicht eines erfindungsgemäßen Abgasturboladers mit Waste-Gate-Ventil in perspektivischer Darstellung.

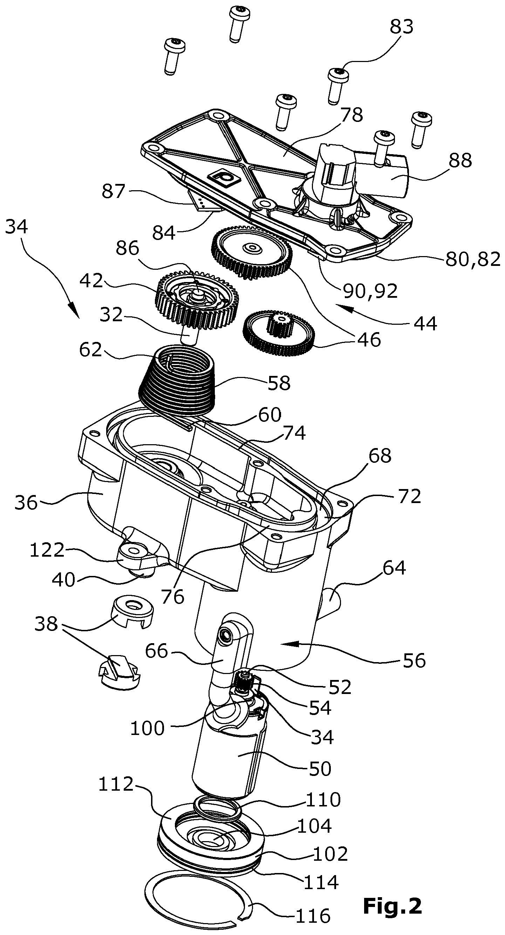

Figur 2 zeigt eine perspektivische Seitenansicht eines Aktorgehäuses des Waste-Gate-Ventils aus Figur 1 in gesprengter Darstellung.
Figur 3 zeigt eine Seitenansicht des Aktorgehäuses des Waste-Gate-Ventils aus Figur 1 in geschnittener Darstellung.
Figur 4 zeigt eine Kopfansicht des Aktorgehäuses des Waste-Gate-Ventils in geschnittener Darstellung.

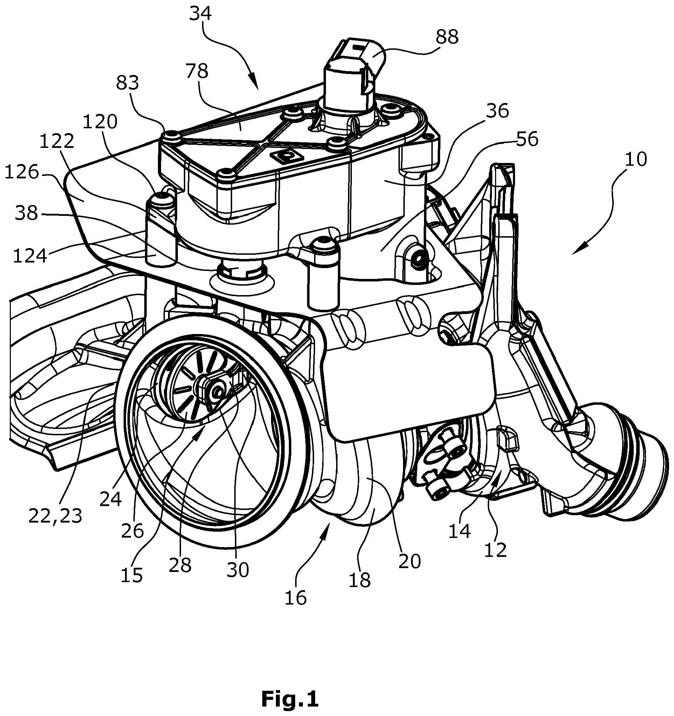

Der in Figur 1 dargestellte Abgasturbolader 10 besteht aus einem Verdichter 12 mit einem Verdichterrad, das in einem Verdichtergehäuse 14 angeordnet ist und einer Turbine 16 mit einem Turbinenrad, das in einem Turbinengehäuse 18 angeordnet ist. Das Turbinenrad ist in bekannter Weise auf einer gemeinsamen Welle mit dem Verdichterrad befestigt, so dass die Bewegung des Turbinenrades durch eine Abgasströmung im Turbinengehäuse 18 über die Welle auf das Verdichterrad übertragen wird, wodurch im Verdichtergehäuse 14 ein Luftstrom komprimiert wird.

Im Turbinengehäuse 18 zweigt stromaufwärts des das Turbinenrad umgebenden Spiralkanals 20 ein Bypasskanal 22 ab, dessen Öffnungsquerschnitt mittels eines Waste-Gate-Ventils 15 regelbar ist. Dieser Bypasskanal 22 mündet hinter dem Spiralkanal 20 in den folgenden Abgaskanal des Verbrennungsmotors.

In einem Bypasskanalabschnitt 23, der im Turbinengehäuse 18 ausgebildet ist, befindet sich ein Ventilsitz 24, der einen Öffnungsquerschnitt des Bypasskanals 22 umgibt. Der Öffnungsquerschnitt ist mittels eines Regelkörpers 26 des Waste-Gate-Ventils 15 in Form einer Klappe regelbar, welche zum Verschluss des Öffnungsquerschnitts auf den Ventilsitz 24 aufgelegt werden kann und zur Öffnung des Durchströmungsquerschnitts des Bypasskanals 22 von diesem abgehoben werden kann.

Hierzu ist der Regelkörper 26 an einem Hebel 28 befestigt, der sich von einer Klappenwelle 30 aus erstreckt und einstückig mit dieser hergestellt ist. Die Klappenwelle 30 weist eine gleiche Drehachse auf, wie eine Abtriebswelle 32 eines Aktors 34, über den der Regelkörper 26 betätigt wird. Hierzu ragt die Abtriebswelle 32 aus einem Aktorgehäuse 36 in Richtung des Turbinengehäuses 18 und wird mittels einer Oldham-Kupplung 38 mit der Klappenwelle 30 drehfest verbunden.

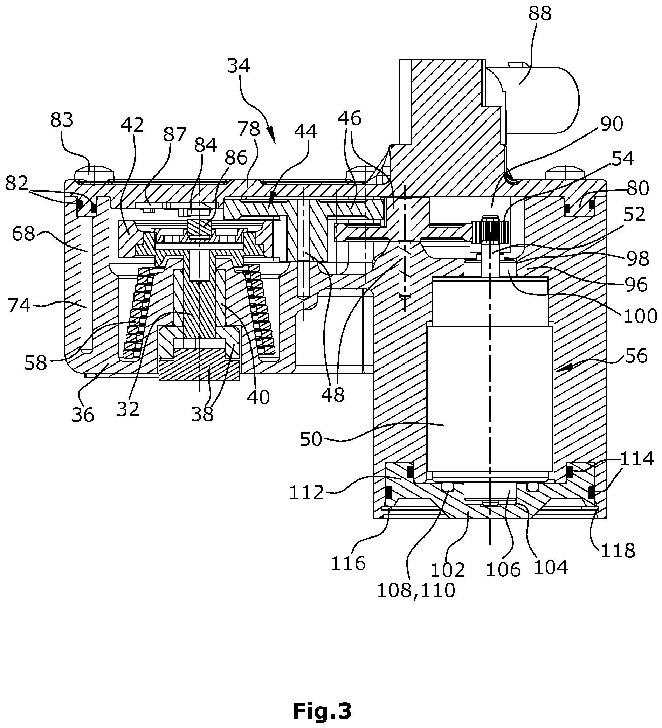

Die Abtriebswelle 32 ist, wie insbesondere in Figur 3 zu erkennen ist, über ein Lager 40 im Aktorgehäuse 36 gelagert, welches als einstückiges Druckgussteil hergestellt ist. Auf der Abtriebswelle 32 ist ein Abtriebszahnrad 42 eines als Stirnradgetriebe ausgebildeten Getriebes 44 angeordnet, welches im Innern des Aktorgehäuses 36 angeordnet ist und dessen Zahnräder 46, auf im Aktorgehäuse 36 befestigten Achsen 48 gelagert sind.

Die Zahnräder 42, 46 des Getriebes 44 werden über einen Elektromotor 50 angetrieben, auf dessen Antriebswelle 52 ein Antriebsritzel 54 angeordnet ist, welches mit der nächsten Getriebestufe des Getriebes 44 kämmt. Der Elektromotor 50 ist in einem Aufnahmebereich 56 des Aktorgehäuses 36 angeordnet, so dass sich der Elektromotor 50 achsparallel zur Abtriebswelle 32 in Richtung des Turbinengehäuses 18 des Abgasturboladers 10 erstreckt.

Im Aktorgehäuse 36 ist zusätzlich noch eine Rückstellfeder 58 angeordnet, die die Abtriebswelle 32 umgibt und deren einer Endschenkel 60 gegen einen Anschlag im Aktorgehäuse 36 anliegt und deren anderer Endschenkel 62 in das Zahnrad 42 greift, so dass die Abtriebswelle 32 und damit der Regelkörper 26 bei Ausfall des Elektromotors 50 oder sonstiger Fehlfunktionen in eine fail-safe-Stellung gedreht wird, um Schäden am Abgasturbolader 10 zu verhindern.

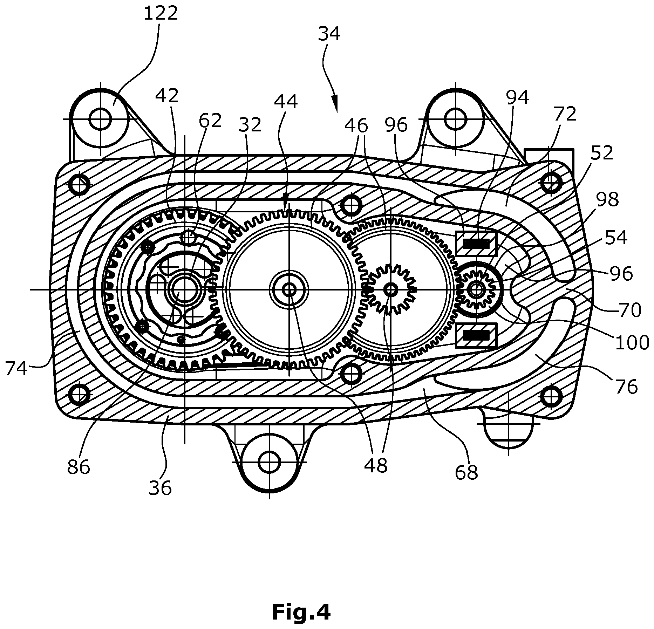

Am Aktorgehäuse 36 sind am Aufnahmebereich 56 des Elektromotors 50 ein Kühlmitteleinlassstutzen 64 und ein Kühlmittelauslassstutzen 66 ausgebildet, die mit einem im Aktorgehäuse 36 ausgebildeten Kühlmittelkanal 68 verbunden sind. Wie in Figur 4 zu erkennen ist, erstreckt sich dieser Kühlmittelkanal 68 mit Ausnahme einer Trennwand 70, die in axialer Richtung zwischen dem Kühlmitteleinlassstutzen 64 und dem Kühlmittelauslassstutzen 66 ausgebildet ist, vollumfänglich um das Getriebe 44 und auch im Wesentlichen über die gesamte axiale Höhe des Aktorgehäuse 36. Der Kühlmittelkanal 68 weist drei Abschnitte auf. In den ersten Abschnitt 72 strömt das Kühlmittel über den Kühlmitteleinlassstutzen 64 ein und umströmt eine erste Seite des Aufnahmebereichs 56 des Elektromotors 50. Dieser erste Abschnitt 72 erstreckt sich im Wesentlichen über die gesamte axiale Höhe des Elektromotors 50 und umgibt diesen über einen Winkelbereich von etwa 60°. Das Kühlmittel strömt axial in Richtung des Getriebes 44 in einen zweiten Abschnitt 74, der den das Getriebe 44 aufnehmenden Bereich des Aktorgehäuses 36 dreiseitig umgibt und sich lediglich über die axiale Höhe dieses Bereiches erstreckt. Von hier aus strömt das Kühlmittel in einen dritten Abschnitt 76, welcher achssymmetrisch zum ersten Abschnitt 72 ausgebildet ist und sich dementsprechend an einer gegenüberliegenden Seite des Elektromotors 50 zum Kühlmittelauslassstutzen 66 axial erstreckt. Der erste Abschnitt 72 und der dritte Abschnitt 76 sind durch die Trennwand 70, die sich über die gesamte Höhe des Kühlmittelkanals 68 erstreckt voneinander getrennt, so dass eine Kurzschlussströmung vom Kühlmitteleinlassstutzen 64 zum Kühlmittelauslassstutzen 66 verhindert wird und eine Zwangsumströmung des Aktors 34 erfolgt.

Erfindungsgemäß wird der Kühlmittelkanal 68 ebenso wie das Innere des Aktorgehäuses 36 durch einen Aktordeckel 78 verschlossen. Dieser Aktordeckel 78 wird insbesondere durch Kunststoffspritzgießen hergestellt. Zum dichten Verschluss des Kühlmittelkanals 68 ist an der zum Aktorgehäuse 36 weisenden Seite ein umlaufender Vorsprung 80 am Aktordeckel 78 ausgebildet, welcher zur Form des Kühlmittelkanals korrespondiert sowie dessen Breite aufweist, so dass dieser Vorsprung 80 in die als Kühlmittelkanal 68 dienende Ausnehmung des Aktorgehäuses 36 ragt. An seinen im Querschnitt gegenüberliegenden Seiten ist jeweils eine mit dem Vorsprung umlaufende Dichtung 82 ausgebildet, über die ein dichter Verschluss des Kühlmittelkanals 68 sichergestellt wird.

Neben dem Verschluss des Aktorgehäuses 36 dient dieser Aktordeckel 78, der über Schrauben 83 am Aktorgehäuse 36 befestigt wird, auch als Träger von elektrischen Bauteilen des Aktors 34. Entsprechend ist am Aktordeckel 78 an seiner ins Innere des Aktors 34 weisenden Seite ein Hallsensor 84 zur Lagerückmeldung angeordnet, der mit einem auf dem Ende der Abtriebswelle 32 angeordneten Magneten 86 kommuniziert. Auch eine Platine 87, die Steuerelemente des Aktors 34 enthalten kann, ist an dieser Seite des Aktordeckels 78 ausgebildet. Diese Platine 87 sowie der Hallsensor 84 sind über im Aktordeckel 78 eingespritzte, nicht sichtbare Leitungen mit einem Stecker 88 verbunden, der einstückig mit dem Aktordeckel 78 hergestellt ist und sich nach außen erstreckt. Zusätzlich erstrecken sich auf der zum Stecker 88 gegenüberliegenden Seite des Aktordeckels 78 zwei Vorsprünge 90 in Richtung des Elektromotors 50, in denen Anschlusskontakte 92 ausgebildet sind, über die Kontaktfahnen 94 des Elektromotors 50 zur Stromversorgung des Elektromotors 50 kontaktiert werden.

Wie aus Figur 3 zu erkennen ist, wird der Elektromotor 50 von der zum Aktordeckel 78 axial gegenüberliegenden Seite in den Aufnahmebereich 56 gegen einen Anschlagbereich 96 des Aktorgehäuses 36 geschoben. Dieser Anschlagbereich 96 weist eine Öffnung 98 zur Aufnahme des A-Lagers 100 des Elektromotors 50 auf, durch die das Antriebsritzel 54 in Richtung des Getriebes 44 ragt. Des Weiteren sind am Anschlagbereich 96 zwei Öffnungen ausgebildet, durch die die Kontaktfahnen 94 des Elektromotors 50 in die Vorsprünge 90 des Aktordeckels 78 ragen.

Der Aufnahmebereich 56 des Elektromotors 50 wird an der zum Aktordeckel 78 axial gegenüberliegenden Seite durch einen Motordeckel 102 verschlossen, der gleichzeitig die Abschnitte 72, 76 des Kühlmittelkanals 68 verschließt. Dieser Motordeckel 102 weist eine Ausnehmung 104 zur Aufnahme eines B-Lagers 106 des Elektromotors 50 sowie eine umlaufende Nut 108 auf, in die eine Wellfeder 110 eingelegt wird, um den Elektromotor 50 axial zu verspannen. Des Weiteren ist am Motordeckel 102 in gleicher Weise wie am Aktordeckel 78 ein umlaufender Vorsprung 112 mit im Querschnitt gegenüberliegenden Dichtringen 114 ausgebildet, der in den Kühlmittekanal 68 ragt und diesen nach außen abdichtet. Die Befestigung des Motordeckels 102 erfolgt über einen Klemmring 116, der im zusammengebauten Zustand in einer Radialnut 118 am axialen Ende des Aufnahmebereiches 56 des Aktorgehäuse 36 gehalten wird.

Die Befestigung des Aktors 34 am Turbinengehäuse 18 erfolgt über Schrauben 120, die durch seitlich am Aktorgehäuse 36 ausgebildete Augen 122 gesteckt und in am Turbinengehäuse 18 ausgebildete Dome 124 mit Innengewinde geschraubt werden. Zur zusätzlichen Abschirmung des Aktorgehäuses 36 gegen Wärmestrahlung ist zwischen dem Aktor 34 und dem Turbinengehäuse 18 ein Wärmeableitblech 126 befestigt.

Das beschriebene Waste-Gate-Ventil verfügt entsprechend über einen eigenen Kühlmittelkreislauf, der es ermöglicht, die Temperatur im Gehäuse des Waste-Gate-Ventils separat, also unabhängig vom Turbinengehäuse des Abgasturboladers zu regeln. Der Aktor des Waste-Gate-Ventils kann vormontiert werden und anschließend am Turbinengehäuse befestigt werden, so dass eine direkte Anbindung des Aktors an das Ventil erreicht wird, wodurch eine sehr genaue Regelung möglich wird. Aufgrund der guten thermischen Entkopplung des Aktors vom Turbinengehäuse und daraus folgend der geringen thermischen Belastung des Elektromotors sowie der anderen elektronischen Bausteine wird eine hohe Lebensdauer erreicht. Die Montage wird erheblich erleichtert, da alle elektronischen Bauteile am Aktordeckel ausgebildet sind und somit mit dem Aktordeckel montiert werden, der jedoch gleichzeitig auch den Kühlmittelkanal verschließt. So wird die Anzahl der vorhandenen und zu montierenden Bauteile reduziert.

Es sollte deutlich sein, dass die vorliegende Erfindung nicht auf das Ausführungsbeispiel beschränkt ist, sondern verschiedene Modifikationen innerhalb des Schutzbereichs des Hauptanspruchs möglich sind. Insbesondere ist es möglich, die Deckel anders zu befestigen oder mit Axialdichtungen zu arbeiten. Auch ist es denkbar, eine durchgehende schlecht Wärme leitende Welle zu benutzen.

## Patentansprüche

1. Abgasturbolader (10) mit einem Waste-Gate-Ventil (15),
einem Verdichter (12) und einer Turbine (16),
einem Turbinengehäuse (18),
einem Bypasskanal (22) zur Umgehung der Turbine (16),
einem Bypasskanalabschnitt (23), der im Turbinengehäuse (18) ausgebildet ist,
einem Aktorgehäuse (36),
einem Elektromotor (50), der im Aktorgehäuse (36) angeordnet ist,
einem Getriebe (44), das im Aktorgehäuse (36) angeordnet ist,
einer Abtriebswelle (32) des Getriebes (44),
einem Regelkörper (26), der mit der Abtriebswelle (32) gekoppelt ist und einen Öffnungsquerschnitt des Bypasskanals (22) beherrscht,
**dadurch gekennzeichnet, dass**
das Aktorgehäuse (36) lösbar am Turbinengehäuse (18) befestigt ist und einen separaten Kühlmittelkanal (68) aufweist, der das Getriebe (44) umfänglich umgibt und der axial durch einen Aktordeckel (78) verschlossen ist.

2. Abgasturbolader mit einem Waste-Gate-Ventil nach Anspruch 1,
**dadurch gekennzeichnet, dass**
am Aktordeckel (78) Elektronikbauteile (84, 87, 88, 92) des Waste-Gate-Ventils (14) angeordnet sind.

3. Abgasturbolader mit einem Waste-Gate-Ventil nach einem der Ansprüche 1 oder 2,
**dadurch gekennzeichnet, dass**
am Aktordeckel (78) ein Stecker (88) ausgebildet ist.

4. Abgasturbolader mit einem Waste-Gate-Ventil nach einem der vorhergehenden Ansprüche,
**dadurch gekennzeichnet, dass**
am Aktordeckel (78) ein berührungsloser Sensor (84) zur Lagerückmeldung befestigt ist, der mit einem Magneten (86) korrespondiert, der mit der Abtriebswelle (32) verbunden ist.

5. Abgasturbolader mit einem Waste-Gate-Ventil nach einem der vorhergehenden Ansprüche,
**dadurch gekennzeichnet, dass**
am Aktordeckel (78) die Anschlusskontakte (92) für den Elektromotor (50) ausgebildet sind.

6. Abgasturbolader mit einem Waste-Gate-Ventil nach einem der vorhergehenden Ansprüche,
**dadurch gekennzeichnet, dass**
der Kühlmittelkanal (68) den Elektromotor (50) über die gesamte axiale Höhe zumindest teilweise radial umgibt.

7. Abgasturbolader mit einem Waste-Gate-Ventil nach Anspruch 6,
**dadurch gekennzeichnet, dass**
am Aktorgehäuse (36) in einem Aufnahmebereich (56) des Elektromotors (50) ein Kühlmitteleinlassstutzen (64) und ein Kühlmittelauslassstutzen (66) ausgebildet sind.

8. Abgasturbolader mit einem Waste-Gate-Ventil nach einem der Ansprüche 6 oder 7,
**dadurch gekennzeichnet, dass**
der den Elektromotor (50) umgebende Kühlmittelkanal (68) axial durch einen Motordeckel (102) verschlossen ist.

9. Abgasturbolader mit einem Waste-Gate-Ventil nach einem der vorhergehenden Ansprüche,
**dadurch gekennzeichnet, dass**
der Kühlmittelkanal (68) in Umfangsrichtung durch eine Trennwand (70) unterbrochen ist, welche zwischen dem Kühlmitteleinlassstutzen (64) und dem Kühlmittelauslassstutzen (66) angeordnet ist und sich axial über die gesamte Höhe des Kühlmittelkanals (68) erstreckt.

10. Abgasturbolader mit einem Waste-Gate-Ventil nach einem der Ansprüche 7 bis 10,
**dadurch gekennzeichnet, dass**
der Elektromotor (50) achsparallel zur Abtriebswelle (32) angeordnet ist und sich der Aufnahmebereich (56) des Elektromotors (50) in Richtung des Turbinengehäuses (18) erstreckt.

11. Abgasturbolader mit einem Waste-Gate-Ventil nach einem der vorhergehenden Ansprüche,
**dadurch gekennzeichnet, dass**
der Regelkörper (26) mit der Abtriebswelle (32) drehfest verbunden ist.

12. Abgasturbolader mit einem Waste-Gate-Ventil nach einem der Ansprüche 1 bis 11,
**dadurch gekennzeichnet, dass**
der Regelkörper (26) mit einer Klappenwelle (30) gekoppelt ist, die eine gemeinsame Drehachse mit der Abtriebswelle (32) aufweist.

13. Abgasturbolader mit einem Waste-Gate-Ventil nach Anspruch 12,
**dadurch gekennzeichnet, dass**
die Klappenwelle (30) mit der Abtriebswelle (32) über eine Oldham-Kupplung (38) gekoppelt ist.

## Claims

1. Turbocharger (10) having a waste gate valve (15),
a compressor (12) and a turbine (16),
a turbine casing (18),
a bypass channel (22) for bypassing the turbine (16),
a bypass channel section (23) which is in the turbine casing (18),
an actuator casing (36),
an electromotor (54) which is arranged in the actuator casing (36),
a transmission (44) which is arranged in the actuator casing (36),
an output shaft (32) of the transmission (44),
a control body (26) which is coupled to the output shaft (32) and controls an opening cross-section of the bypass channel (22)
**characterized in that**
the actuator casing (36) is detachably secured to the turbine casing (18) and comprises a separate coolant channel (68) which surrounds the circumference of the transmission (44) and which is closed axially by an actuator cover (78).

2. Turbocharger having a waste gate valve of claim 1, **characterized in that** electronic components (84, 87, 88, 92) of the waste gate valve (14) are arranged on the actuator cover (78).

3. Turbocharger having a waste gate valve of one of claims 1 or 2, **characterized in that** a connector (8) is formed on the actuator cover (78).

4. Turbocharger having a waste gate valve of one of the preceding claims, **characterized in that** a contactless sensor (84) for position feedback is fastened on the actuator cover (78), the sensor communicating with a magnet (86) connected with the output shaft (32).

5. Turbocharger having a waste gate valve of one of the preceding claims, **characterized in that** the terminals (92) for the electric motor (50) are formed on the actuator cover (78).

6. Turbocharger having a waste gate valve of one of the preceding claims, **characterized in that** the coolant duct (68) surrounds the electric motor radially, at least in part, over the entire axial height.

7. Turbocharger having a waste gate valve of claim 6, **characterized in that** a coolant inlet port (64) and a coolant outlet port (66) are formed on the actuator casing (36) in a receiving portion (56) of the electric motor (50).

8. Turbocharger having a waste gate valve of one of claims 6 or 7, **characterized in that** the coolant duct (68) surrounding the electric motor (50) is closed axially by a motor cover (102).

9. Turbocharger having a waste gate valve of one of the preceding claims, **characterized in that** the coolant duct (68) is interrupted in the circumferential direction by a partition wall (70) arranged between the coolant inlet port (64) and the coolant outlet port (66) and extending axially over the entire height of the coolant duct (68).

10. Turbocharger having a waste gate valve of one of claims 7 to 10, **characterized in that** the electric motor (50) is arranged axially parallel to the output shaft (32) and the receiving portion (56) of the electric motor (50) extends in the direction of the turbine casing (18).

11. Turbocharger having a waste gate valve of one of the preceding claims, **characterized in that** the control body (26) is connected for rotation with the output shaft (32).

12. Turbocharger having a waste gate valve of one of claims 1 to 11, **characterized in that** the control body (26) is coupled with a flap shaft (30) having a common axis of rotation with the output shaft (32).

13. Turbocharger having a waste gate valve of claim 12, **characterized in that** the flap shaft (30) is coupled with the output shaft (32) via an Oldham coupling (38).

## Revendications

1. Turbocompresseur (10) avec une soupape de décharge (15),
un compresseur (12) et une turbine (16),
un carter de turbine (18),
un canal de dérivation (22) pour contourner la turbine (16),
une section du canal de dérivation (23) formée dans le carter de turbine (18),
un carter d'actionneur (36),
un moteur électrique (50) disposé dans le carter d'actionneur (36),
une transmission (44) disposée dans le carter d'actionneur,
un arbre entrainé (32) de la transmission (44),
un corps de réglage (26) couplé avec l'arbre entrainé (22) et gouvernant une section d'ouverture du canal de dérivation (22),
**caractérisé en ce que**
le carter d'actionneur (36) est monté sur le carter de turbine de manière amovible et comprend un canal de réfrigérant (68) séparé qui entoure la transmission dans le sens circonférentiel et qui est fermé axialement par un couvercle d'actionneur (78).

2. Turbocompresseur avec une soupape de décharge selon la revendication 1, **caractérisé en ce que** des composants électroniques (84, 87, 88, 92) de la soupape de décharge (14) sont disposés sur le couvercle d'actionneur (78).

3. Turbocompresseur avec une soupape de décharge selon une des revendications 1 ou 2, **caractérisé en ce qu'**un connecteur (88) est formé sur le couvercle d'actionneur (78).

4. Turbocompresseur avec une soupape de décharge selon l'une quelconque des revendications précédentes, **caractérisé en ce qu'**un capteur sans contact (84) est monté sur le couvercle d'actionneur (78) pour la signalisation de position, le capteur correspondant avec un aimant (86) lié avec l'arbre entraîné (32).

5. Turbocompresseur avec une soupape de décharge selon l'une quelconque des revendications précédentes, **caractérisé en ce que** les contacts de borne (92) pour ledit moteur électrique (50) son formés sur le couvercle d'actionneur (78).

6. Turbocompresseur avec une soupape de décharge selon l'une quelconque des revendications précédentes, **caractérisé en ce que** le canal de réfrigérant (68) entoure ledit moteur électrique (50) au moins partiellement radialement sur toute l'hauteur axiale.

7. Turbocompresseur avec une soupape de décharge selon la revendication 6, **caractérisé en ce qu'**une tubulure d'alimentation en réfrigérant (64) et une tubulure de décharge de réfrigérant (66) sont formées sur le carter d'actionneur (36) dans une zone de réception (56) du moteur électrique (50).

8. Turbocompresseur avec une soupape de décharge selon une des revendications 6 ou 7, **caractérisé en ce que** le canal de réfrigérant (68) entourant le moteur électrique (40) est fermé axialement par un couvercle de moteur (102).

9. Turbocompresseur avec une soupape de décharge selon l'une quelconque des revendications précédentes, **caractérisé en ce que** le canal de réfrigérant (68) est interrompu dans la direction circonférentielle par une cloison (70) disposée entre la tubulure d'alimentation en réfrigérant (64) et la tubulure de décharge de réfrigérant (66) et s'étendant dans la direction axiale sur toute l'hauteur du canal de réfrigérant (68).

10. Turbocompresseur avec une soupape de décharge selon une des revendications 7 à 10, **caractérisé en ce que** le moteur électrique (50) est disposé paraxialement par rapport à l'arbre entrainé (32) et la zone de réception (56) du moteur électrique (50) s'étend vers le carter de turbine (18).

11. Turbocompresseur avec une soupape de décharge selon l'une quelconque des revendications précédentes, **caractérisé en ce que** le cops de réglage (26) est solidaire en rotation de l'arbre entrainé (32).

12. Turbocompresseur avec une soupape de décharge selon une des revendications 1 à 11, **caractérisé en ce que** le corps de réglage (30) est couplé avec un arbre de clapet (30) qui comprend un axe de rotation commun avec l'arbre entrainé (32).

13. Turbocompresseur avec une soupape de décharge selon la revendication 12, **caractérisé en ce que** l'arbre de clapet (30) est couplé avec l'arbre entrainé (32) par un accouplement Oldham (38).
